# EUROPÄISCHE PATENTANMELDUNG

(11) **EP 0 527 466 A1**
(43) Veröffentlichungstag der Anmeldung: **17.02.1993**
(21) Anmeldenummer: 92113647.9
(22) Anmeldetag: 11.08.1992
(51) Int. Cl.: F25B 17/08, F28D 20/00

(54) **Sorptionsverfahren zum Kühlen und/oder Heizen**

(30) Priorität: 14.08.1991 DE 4126960
(71) Anmelder: ZEO-TECH Zeolith Technologie GmbH, D-85716 Unterschleissheim (DE)
(72) Erfinder: Maier-Laxhuber, Peter K., Dr., W-8000 München 60 (DE); Schwarz, Jörn, Dipl.-Ing. Dr., W-8000 München 50 (DE)

(57) **Zusammenfassung**

Verfahren zur Speicherung und Nutzung von Wärme bzw. zur Bereitstellung von Kälte, wobei während einer Desorptionsphase durch Temperaturerhöhung aus einem Sorptionsmittel (1) Arbeitsmitteldampf desorbiert wird und wobei - im Falle der Wärmenutzung - nach der Desorptionsphase sowohl das flüssige Arbeitsmittel (9) als auch das Sorptionsmittel (1) thermisch isoliert und eventuell durch weitere Wärmezufuhr auf relativ hoher Temperatur gehalten wird und daß zur Nutzung von Wärme aus dem Sorptionsmittel Wärme entzogen wird und das Sorptionsmittel (1) daraufhin Arbeitsmitteldampf sorbiert und die dabei freiwerdende Sorptionswärme ebenfalls entnehmbar ist oder daß im Falle der Kältenutzung nach der Desorptionsphase das flüssige Arbeitsmittel (9) und das Sorptionsmittel (1) auf Umgebungstemperatur abkühlt.

## Beschreibung

Die Erfindung betrifft einen Wärme- und Kälteerzeugungs- bzw. Speicherapparat.

Der Oberbegriff Sorption beschreibt einen Energiewandlungsprozeß, bei dem ein Sorptionsmittel ein Arbeitsmittel unter Energieumsetzung aufsaugt (Sorption) und wieder abgibt (Desorption).

Die Sorption läuft in zwei Teilphasen ab:
In der ersten Teilphase, der Desorptionsphase, wird durch Zufuhr von Wärme das Arbeitsmittel aus dem Sorptionsmittel dampfförmig ausgetrieben. Dieses dampfförmige Arbeitsmittel kann durch Wärmeentzug verflüssigt werden und bis zur späteren Nutzung in der Sorptionsphase gespeichert werden.
In der zweiten Teilphase, der Sorptionsphase, saugt das Sorptionsmittel das Arbeitsmittel an und bindet es. Das Sorptionsmittel erwärmt sich dabei. Das angesaugte Arbeitsmittel kann vorher aus der flüssigen Arbeitsmittelphase verdampfen und dabei Verdampfungskälte produzieren. Dieser Sorptionsprozeß läuft bis zur Sättigung des Sorptionsmittels. Der Sättigungszustand hängt dabei im wesentlichen von der Sorptionsmitteltemperatur und der Verdampfungstemperatur des Arbeitsmittels ab.

Die technische Nutzung von Sorptionsprozessen, bei denen von der Aufnahme bzw. der Abgabe von Wärme Gebrauch gemacht wird, erfolgt in sog. Sorptionsapparaten. Gegenüber Kompressionskältemaschinen haben Sorptionsapparate den Vorteil, daß sie rein thermisch angetrieben werden können, d.h. daß zumindest das Sorptionsmittel am Ende der Desorptionsphase auf hohem Temperaturniveau liegt und damit eine beträchtliche, fühlbare Wärmemenge gespeichert hält. Diese Wärmemenge ist, zusammen mit der bei der Sorption freiwerdenden Sorptionswärme, für eine spätere Nutzung gespeichert. Andererseits kann während der Sorptionsphase, wenn also das Arbeitsmittel dampfförmig vom Sorptionsmittel sorbiert wird, die bei der Verdampfung des Arbeitsmittels erzeugte Kälte genutzt werden.

Eine Vorrichtung zur Nutzung der gespeicherten Wärme ist beispielsweise aus der Deutschen Patentschrift 34 13 349.6 bekannt. Hierbei wird Nachtstrom während der Desorptionsphase in den Apparat eingebracht und während des Tages Wärme aus dem Apparat für die Beheizung eines Raumes entnommen.

In den Innenstadtbereichen vieler Großstädte werden in Zukunft verstärkt Elektro-Autos fahren. Die von verschiedenen Staaten erlassenen Abgasvorschriften sind bzw. werden in Zukunft so stark verschärft werden, daß zu einem gewissen Prozentsatz neu zugelassene Fahrzeuge überhaupt keine Abgas-Emissionen mehr aufweisen dürfen. Alle Elektro-Fahrzeuge müssen im Winter geheizt und im Sommer gekühlt werden. Eine elektrische Direktheizung verbietet sich wegen der sowieso schon geringen Reichweite von zur Zeit unter 100 km. Die bisher vorgeschlagene Alternative besteht darin, in einem separaten Heizgerät wieder fossile Brennstoffe zu verbrennen. Das »abgasfreie« Elektro-Auto ist damit aber nicht realisierbar.

Nicht weniger problematisch sind die alternativen Vorschläge im Falle der Klimatisierung eines Elektro-PKWs. So ist eine batteriebetriebene Kompressor-Anlage realisiert worden. Die Kosten und die mitzuführenden Massen für Elektromotor, Kompressor, Verdampfer, Verflüssiger und insbesondere die Zusatzbatterien liegen jedoch beträchtlich über denen einer konventionellen Fahrzeugklimaanlage. Hinzu kommt, daß mit einer konventionellen Kompressor-Klimaanlage im Winter nicht geheizt werden kann und eine zusätzliche mit fossilen Brennstoffen betriebene Standheizung zusätzliches Gewicht bedeutet.

Aufgabe der vorliegenden Erfindung ist die Darstellung eines kombinierten Speichers zur Nutzung von Wärme bzw. zur Bereitstellung von Kälte. Der Apparat soll dabei nur aus umweltungefährlichen Stoffen bestehen und keine Schadstoffe emittieren.

Gelöst wird diese Aufgabe nach den Patentansprüchen 1 und 2 sowie 6 und 7.

Mit dem erfindungsgemäßen Sorptionsapparat ist somit mit einem einzigen Gerät sowohl eine Nutzung von Wärme als auch von Kälte möglich. Um jeweils eine optimale Bereitstellung von Wärme oder Kälte zu erzielen, müssen lediglich die Verfahrensschritte nach der Desorptionsphase leicht variiert werden.

Beide Anwendungsfälle beinhalten eine sog. Desorptionsphase, in welcher das Sorptionsmittel durch Zufuhr von Wärme erhitzt wird. Dabei wird eventuell bereits vorher sorbiertes Arbeitsmittel desorbiert, d.h. Arbeitsmitteldampf wird während der Desorptionsphase aus dem Sorptionsmittel ausgetrieben. Sinnvollerweise wird dieser Arbeitsmitteldampf rückkondensiert und zwischengespeichert, um nicht nach jeder Desorptionsphase neues Arbeitsmittel in die Apparatur nachfüllen zu müssen.

Nach der Desorptionsphase unterscheiden sich die beiden Verfahrensschritte. Im Falle der reinen Wärmenutzung wird das Sorptionsmittel auf der maximalen Temperatur gehalten, um die maximale, fühlbare Wärmemenge für die spätere Wärmenutzung bereitzuhalten. Dies geschieht am besten dadurch, daß das Sorptionsmittel thermisch isoliert gelagert wird und daß notfalls, sofern dies praktikabel ist, die thermischen Wärmeverluste durch Nachheizen kompensiert werden. Das verflüssigte Arbeitsmittel wird nach Möglichkeit bei seiner maximalen Kondensationstemperatur rückverflüssigt. Im Falle von Wasser bedeutet dies, daß die Kondensationstemperatur bis 100 °C ansteigen kann. Bis zu dieser Temperatur befindet sich das gesamte Sorptionssystem noch im Unterdruckbereich. Gewichtsintensive Überdruckapparaturen können deshalb entfallen. Auch hier empfiehlt sich bei längeren Wartezeiten bis zur eigentlichen Wärmenutzung eine thermische Isolierung des flüssigen Sorptionsmittels. Auch hier kann gegebenenfalls der Wärmeverlust durch weitere Zufuhr von Wärme kompensiert werden. Die Absperrvorrichtung zwischen dem Sorptionsmittel und dem Arbeitsmittel kann dabei offen bleiben, da das Sorptionsmittel nicht abkühlt.

Wird nunmehr Wärme aus dem Sorptionsapparat nutzbar gemacht, so nimmt zunächst die Temperatur des Sorptionsmittels ab. Parallel zu dieser Temperaturabnahme wird Arbeitsmitteldampf im Sorptionsmittel sorbiert. Um den Arbeitsmitteldampf zu erzeugen, muß flüssiges Arbeitsmittel verdampfen. Dieses kühlt sich dadurch ab. Die Verdampfungswärme stammt also zunächst aus der fühlbaren Wärme der bei hoher Temperatur gespeicherten, flüssigen Arbeitsmittelmenge. Durch weitere Wärmeentnahme aus dem Sorptionsmittel wird die Verdampfungstemperatur des Arbeitsmittel weiter absinken, bis ein Temperaturniveau unter dem Umgebungstemperaturniveau erreicht ist. Ab diesem Zeitpunkt läßt sich Wärme aus der Umgebung des Sorptionsapparates zur weiteren Verdampfung des Arbeitsmittels nutzen. Hierzu muß lediglich ein flüssiges oder gasförmiges Medium über einen Wärmetauscher an die Verdampfungseinrichtungen angekoppelt werden. Als Umgebungswärme eignen sich beispielsweise alle Arten von Abwärmen aus Haushalt oder Industrieprozessen oder beispielsweise Abwärme eines Elektro-Motors in einem Elektro-Fahrzeug.

Sollte das Umgebungstemperaturniveau unterhalb der Erstarrungstemperatur des Arbeitsmittels liegen, kann durch Zugabe von weiteren Stoffen die Erstarrungstemperatur unter das Umgebungstemperaturniveau abgesenkt werden.

Andererseits kann aber auch durch die Verwendung einer größeren Arbeitsmittelmenge eine größere Wärmekapazität des Gesamtsystemes erreicht werden. Bei entsprechend gewählter Arbeitsmittelmenge wird die tiefste Verdampfungstemperatur deshalb immer oberhalb eines bestimmten Temperaturniveaus zu liegen kommen.

Bei der Verwendung eines geeigneten Arbeitsmittels, beispielsweise Wasser, kann aber auch die Erstarrungswärme des Arbeitsmittels selbst als Wärmequelle für das Verdampfen bzw. Sublimieren des Arbeitsmitteldampfes dienen. In diesem Falle wird also zur Nutzung der Wärme erstens die fühlbare Wärme des Sorptionmittels, zweitens die fühlbare Wärme des gespeicherten Arbeitsmittels, drittens die reine Sorptionswärme, die bei der Reaktion des Arbeitsmittels mit dem Sorptionsmittel auftritt, viertens die Wärmemenge, die aus der Umgebung des Sorptionapparates eingebracht werden kann und fünftens die Erstarrungswärme des Arbeitsmittels selbst zur Bereitstellung von Wärme auf einem nutzbaren Temperaturniveau herangezogen.

Im Falle der reinen Kältenutzung ist die gleichzeitig gespeicherte Wärmemenge uninteressant. Es empfiehlt sich daher, nach der Desorptionsphase auf eine weitere Warmhaltung des Sorptionapparates zu verzichten. Sowohl Sorptionsmittel als auch flüssiges Arbeitsmittel werden trotz thermischer Isolierung im Laufe der Zeit auf Umgebungstemperatur abkühlen. In diesem Fall ist es zwingend notwendig, daß die Absperreinrichtung durch die Regelungseinheit verschlossen wird und verschlossen bleibt. Anderenfalls würde abkühlendes Sorptionsmittel Arbeitsmitteldampf anziehen und sorbieren.

Um nunmehr Kälte zur Verfügung zu stellen, muß lediglich über die Regelungseinheit die Absperreinheit geöffnet werden, so daß Arbeitsmitteldampf in die Sorptionsmittelfüllung strömen kann. Bereits abgekühltes Sorptionsmittel wird dadurch erhitzt und das noch nicht verflüssigte Arbeitsmittel abgekühlt. Die durch die Verdampfung entstehende Kälte läßt sich über entsprechende Wärmetauschereinrichtungen an jedes beliebige Wärmeträgermedium abgeben. Geeignet erscheinen hier direkte Verdampfer, welche Umgebungsluft abkühlen bzw. entfeuchten oder Wärmeträgerkreisläufe, welche beispielsweise über einen Wasserkreislauf die erzeugte Kälte an einen weiter entfernt liegenden Kälteverbraucher übertragen.

Um die maximale Kapazität des Sorptionsmittels zu nutzen, empfiehlt sich, das Sorptionsmittel während dieser Sorptionsphase zu kühlen. In der Regel wird hierzu Umgebungsluft angesaugt und durch geeignete Wärmetauscher gepreßt. Geeignet erscheinen aber auch flüssige Wärmeträger, welche einen besseren Wärmeübergang haben und die Wärme leichter über weitere Strecken transportieren können.

Die Regelungseinheit kann durch Öffnen bzw. Schließen der Absperreinrichtung die Verdampfungstemperatur des Arbeitsmittels einstellen.

Normalerweise arbeiten Sorptionsapparate der erfindungsgemäßen Art unter Luftabschluß, d.h. innerhalb des Sorptionapparates befindet sich nur das nichtflüchtige Sorptionsmittel und das Arbeitsmittel. Vorteilhaft ist es aber auch, sog. offene Systeme zu verwenden, bei denen bei Bedarf über eine zusätzliche Vakuumpumpe das System so weit evakuiert wird, daß der Arbeitsmitteldampf frei zur und in der Sorptionsmittelfüllung strömen kann. Hierzu muß lediglich die Luft aus dem Sorptionsmittel soweit abgesaugt werden, daß der jeweilige Arbeitsmitteldampfdruck unterschritten wird. Derartige Systeme stellen dann keine hohen Anforderungen an die Vakuumdichtigkeit. Möglich ist dann auch eine leichte Trennung des Sorptionsmittels vom übrigen Sorptionsapparat, um das Sorptionsmittel beispielsweise an anderer Stelle schneller oder energetisch günstiger zu desorbieren. Dies ist besonders dann sinnvoll, wenn die eingebrachte Sorptionsmittelfüllung bereits so Schwer ist, daß nur diese und nicht der gesamte Sorptionsapparat von einer Person getragen werden kann.

Vorteilhaft ist es auch, das Sorptionsmittel durch eine elektrische Heizvorrichtung zu desorbieren. Auf diese Weise ist mittels einfacher Heizwiderstände eine Desorption bei unterschiedlichen Spannungen möglich.

Erfindungsgemäß läßt sich der Sorptionsapparat besonders vorteilhaft auch in ein mobiles Fahrzeug integrieren. Es kann sich hierbei sowohl um ein verbrennungsmotorisch angetriebenes als auch batteriebetriebenes Fahrzeug handeln. Die Größe des Sorptionsapparates ist dabei so zu wählen, daß während einer vorbestimmten, maximalen Fahrzeit entweder die Wärme oder die erzeugbare Kälte ausreicht, den Fahrzeuginnenraum bzw. die mitgeführten Waren zu wärmen bzw. kühl zu halten.

Im Falle eines abgasbetriebenen Fahrzeugs kann es sinnvoll sein, den Sorptionsapparat beispielsweise im Winter aus dem Fahrzeug zu entfernen und nur während der heißen Sommermonate im Fahrzeug, beispielsweise auf einem der rückwärtigen Sitze, mitzuführen.

Sofern das System über eine zusätzliche Vakuumpumpe verfügt, kann diese über das 12- oder 24 V-Bordnetz angetrieben werden. Über das Bordnetz läßt sich auch ein Gebläse antreiben, welches die Innenraumluft über einen geeigneten Verdampfer lenkt und abkühlt.

Die aus dem Sorptionsmittel abzuführende Sorptionswärme kann beispielsweise über eine kleine Umwälzpumpe und einen Wärmetauscher durch ein geöffnetes Seitenfenster abgeführt werden. In diesem Anwendungsfall kann es auch zweckmäßig sein, die Sorptionsmittelfüllung zur Desorption aus der Gesamtanlage zu entnehmen und an einem separaten Ort zu desorbieren. Sinnvoll erscheint es aber auch, die Sorptionsmittelfüllung im Sorptionsapparat zu belassen und die Desorptionswärme über ein Elektrokabel vom Haushaltsstromnetz zuzuführen.

Eine Desorption über die hauseigene Stromversorgung erscheint auch bei batteriebetriebenen Fahrzeugen sinnvoll. Hier kann beispielsweise während der Ladezeit der Fahrzeugbatterie desorbiert werden. Da das Fahrzeug bis zur nächsten Fahrt ohnehin an die Stromversorgung angeschlossen bleibt, läßt sich auch nach der Desorptionsphase eine Kompensation der thermischen Wärmeverluste durch einfaches elektrisches Nachheizen aufrechterhalten. Bei Fahrtbeginn ist somit der Speicher optimal geladen.

Wird eine Fahrt angetreten, bei der zwischen Hin- und Rückfahrt ein längerer Zeitraum ohne Netzankopplung überbrückt werden muß, ist es besonders vorteilhaft, die Absperreinrichtung so lange wie möglich geschlossen zu halten und zunächst nur die fühlbare Wärme aus dem Sorptionsmittel abzugeben. Erst wenn diese Wärme nicht mehr ausreicht, den Fahrzeuginnenraum zu beheizen, kann die Absperreinrichtung allmählich geöffnet werden, um auch die im Arbeitsmittel noch gespeicherte Wärme freizusetzen. Da in aller Regel die Hin- und Rückfahrt etwa gleiche Zeitspannen umfaßt, wird am Ende der Hinfahrt der Sorptionsbehälter nahezu auf Umgebungstemperatur abgekühlt sein. In diesem Fall geht auch bei längerer Wartezeit aus dem Sorptionsmittel keine Wärme verloren. Bei sehr langer Wartezeit wird auch das flüssige Sorptionsmittel abkühlen. Durch Öffnen der Absperreinrichtung wird aber dennoch eine erhebliche Wärmemenge im Sorptionsmittel für die Rückfahrt freigesetzt werden. Diese Wärmemenge ist etwa gleich groß wie die zuvor im heißen Sorptionsmittel gespeicherte fühlbare Wärmemenge.

Besonders vorteilhaft hat sich der Einsatz von Zeolithen als Sorptionsmittel und von Wasser als Arbeitsmittel erwiesen. Gerade Zeolithe zeigen für Wasser eine sehr hohe Aufnahmefähigkeit, bei relativ hohen Sorptionswärmen. Wasser hat zudem eine sehr hohe spezifische Verdampfungswärme und eine hohe Erstarrungsenthalpie. Zusammen mit Zeolith bildet es ein Stoffpaar, welches gerade für mobile Speicher und Kälteerzeuger besonders geeignet ist.

Zeolithe können auf sehr hohe Temperturen erhitzt werden, ohne daß sich Zersetzungserscheinungen zeigen. Dies ermöglicht hohe Speichertemperaturen mit einem hohen Anteil an fühlbarer Wärme. Ebenso kann Wasser bei 100 °C gespeichert werden, ohne daß die Systeme bereits auf Überdruck ausgelegt werden müssen. Zeolithe sind desweiteren umweltunschädlich und können problemlos wiederverwertet werden.

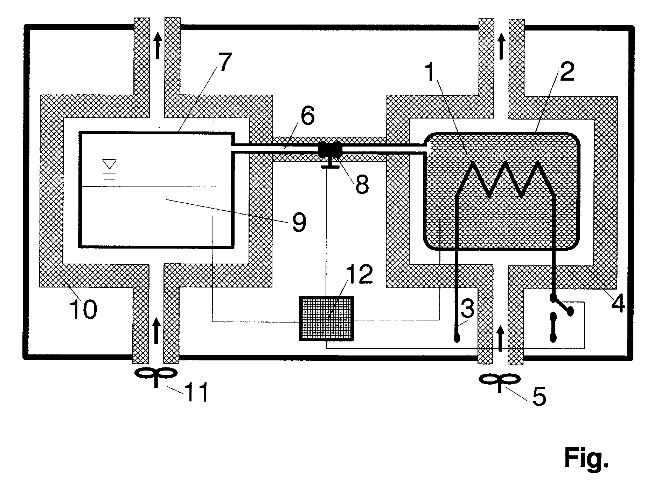

Der in der Zeichnung dargestellte Sorptionsapparat für ein Elektro-Fahrzeug enthält ein Sorptionsmittel 1, innerhalb eines Sorptionsmittelbehälters 2. Eine elektrische Heizung 3 dient zur Wärmezufuhr während der Desorptionsphase. Der Sorptionsmittelbehälter 2 ist von einem Isoliergehäuse 4 umgebeit. Zwischen diesem und dem Sorptionsmittelbehälter 2 kann Luft, gefördert über ein Gebläse 5, Wärme aus dem Sorptionsmittel 1 austragen. An den Sorptionsmittelbehälter 2 ist über eine Arbeitsmitteldampfleitung 6 ein Arbeitsmittelbehälter 7 angeschlossen. Die Arbeitsmitteldampfleitung 6 enthält eine Absperreinrichtung 8, die im geschlossenen Zustand verhindert, daß dampfförmiges Arbeitsmittel 9, das im Arbeitsmittelbehälter 7 gespeichert ist, in den Sorptionsmittelbehälter 2 abströmt. Der Arbeitsmittelbehälter 7 ist thermisch durch eine Isolierhaube 10 isoliert. Auch hier kann Umgebungsluft, angetrieben über ein Gebläse 11, zwischen Isolierhaube 10 und Arbeitsmittelbehälter 7 gefördert werden. Eine Steuer- und Regeleinheit 12 vergleicht die Temperatur des Arbeitsmittels 9 mit der Temperatur des Sorptionsmittels 1, der Stellung der Absperreinrichtung 8 und dem Betriebszustand der elektrischen Heizung 3.

Die zum Betrieb dieses Sorptionsapparates erforderliche thermische Energie wird dem Sorptionsmittel 1, zeitgleich mit dem Aufladen der Fahrzeugbatterie der Elektro-Autos, zugeführt. Die Steuer- und Regeleinheit 12 läßt hierzu über die elektrische Heizung 3 das Sorptionsmittel 1 bis zum Erreichen der Desorptionsendtemperatur aufheizen. Dabei wird das im Sorptionsmittelbehälter 2 ausgetriebene Arbeitsmittel über die Arbeitsmitteldampfleitung 6 und die geöffnete Absperreinrichtung 8 in den Arbeitsmittelbehälter 7 abströmen und an der Außenwand des Arbeitsmittelbehälters 7 kondensiert. Die Kondensation kann dabei, im Falle der Wärmenutzung, bei relativ hoher Temperatur (bei Wasser als Arbeitsmittel bis zu 100 °C) erfolgen.

Das Gebläse 11 wird dabei nur dann den Arbeitsmittelbehälter 7 kühlen, falls der Kondensationsdruck über den Atmosphärendruck ansteigen sollte. Nach der Desorptionsphase kann über die elektrische Heizung 3 die durch die Isolierung verlorene Wärmemenge nachgeladen werden.

Um Wärme für die Fahrgastzelle auszukoppeln, wird das Gebläse 5 Umluft oder Frischluft über den Sorptionsmittelbehälter 2 lenken. Dadurch kühlt sich das Sorptionsmittel ab und kann bei geöffneter Absperreinrichtung 8 Arbeitsmitteldampf aus dem Arbeitsmittelbehälter 7 ansaugen. Bei der Sorption dieses Arbeitsmitteldampfes wird die Kondensationswärme des Arbeitsmittels plus die reine Sorptionswärme frei und an die Luftströmung übertragen. Die verbliebene Arbeitsmittelmenge 9 im Arbeitsmittelbehälter 2 wird dabei abgekühlt. Sobald deren Temperatur unter die Abwärmetemperatur sinkt, kann über das Gebläse 11 Umgebungsluft über die Oberflächen des Arbeitsmittelbehälters 7 gelenkt werden. Sofern keine ausreichende Umgebungswärmequelle zur Verfügung steht, kann das Arbeitsmittel 9 im Arbeitsmittelbehälter 7 erstarren und dadurch die notwendige Sublimationswärme bereitstellen.

Diese für den Fall der reinen Wärmenutzung beschriebene Regelung ist auch im Fall der Kältenutzung anzuwenden. Hierzu wird lediglich die über das Gebläse 11 geförderte Luft in den Innenraum gelenkt, während die über das Gebläse 5 transportierte Luft in die Umgebung austritt.

## Patentansprüche

1. Verfahren zur Speicherung und Nutzung von Wärme bzw. zur Bereitstellung von Kälte, wobei während einer Desorptionsphase durch Temperaturerhöhung Arbeitsmitteldampf aus einem Sorptionsmittel desorbiert wird und wobei - im Falle der Wärmenutzung - nach der Desorptionsphase sowohl das flüssige Arbeitsmittel als auch das Sorptionsmittel thermisch isoliert gelagert und eventuell durch weitere Wärmezufuhr auf relativ hoher Temperatur gehalten wird und daß zur Nutzung von Wärme aus dem Sorptionsmittel Wärme entzogen wird und das Sorptionsmittel daraufhin Arbeitsmitteldampf sorbiert und die dabei freiwerdende Sorptionswärme ebenfalls entnommen wird.

2. Verfahren zur Speicherung und Nutzung von Kälte, wobei während einer Desorptionsphase durch Wärmezufuhr in ein Sorptionsmittel aus diesem Arbeitsmitteldampf desorbiert wird und wobei - im Falle der Nutzung von Kälte - nach der Desorptionsphase sowohl dem Sorptionsmittel als auch dem flüssigen Arbeitsmittel keine weitere Wärme zugeführt wird und zur Nutzung der Kälte das flüssige Arbeitsmittel verdampft und der Arbeitsmitteldampf vom Sorptionsmittel sorbiert wird und die im Sorptionsmittel freiwerdende Wärme abgeführt wird.

3. Verfahren nach Anspruch 1 oder 2, dadurch gekennzeichnet, daß das flüssige Arbeitsmittel zu seiner Verdampfung Wärme aus einem Fahrzeug oder der Fahrzeugumgebung aufnimmt.

4. Verfahren nach einem der vorangehenden Ansprüche, dadurch gekennzeichnet, daß
die flüssige Arbeitsmittelmenge größer gewählt ist als die Menge, welche das Sorptionsmittel maximal sorbieren kann.

5. Verfahren nach einem der Ansprüche 1 bis 4, dadurch gekennzeichnet, daß
durch Teilverdampfung des flüssigen Arbeitsmittels sich die noch nicht verdampfte Arbeitsmittelmenge unter die Erstarrungstemperatur abkühlt und zumindest teilweise erstarrt.

6. Sorptionsapparat mit einem Sorptionsmittel, mit einem Arbeitsmittelvorratsbehälter, der ein flüssiges Arbeitsmittel enthält, welches vom Sorptionsmittel sorbierbar ist, mit einem Verdampfer-Wärmetauscher, welcher die bei der Verdampfung von Arbeitsmittel erzeugte Kälte an ein flüssiges oder gasförmiges Medium abgibt, mit einer Absperreinrichtung zwischen dem flüssigen Arbeitsmittel und dem Sorptionsmittel und mit einer Regelung-/Steuereinrichtung, welche - im Falle der späteren Wärmenutzung - nach der Desorptionsphase sowohl das Sorptionsmittel als auch das flüssige Arbeitsmittel auf relativ hohen Temperaturen hält.

7. Sorptionsapparat mit einem Sorptionsmittel, mit einem Arbeitsmittelvorratsbehälter, der ein flüssiges Arbeitsmittel enhält, welches vom Sorptionsmittel sorbierbar ist, mit einem Verdampfer-Wärmetauscher, welcher die bei der Verdampfung von Arbeitsmittel erzeugte Kälte an ein flüssiges oder gasförmiges Medium abgibt, mit einer Absperreinrichtung zwischen dem flüssigen Arbeitsmittel und dem Sorptionsmittel und mit einer Regelung-/Steuereinrichtung, welche - im Falle der späteren Kältenutzung - nach der Desorptionsphase die Absperreinrichtung geschlossen hält und das flüssige Arbeitsmittel und das Sorptionsmittel auf Umgebungstemperatur abkühlen läßt.

8. Sorptionsapparat nach einem der Ansprüche 6 oder 7, dadurch gekennzeichnet, daß
an das Sorptionsmittel eine Vakuumpumpe anschließbar ist, welche den Apparat so weit evakuiert, daß der Arbeitsmitteldampf frei in das Sorptionsmittel strömen kann.

9. Sorptionsapparat nach einem der Ansprüche 6 bis 8, dadurch gekennzeichnet, daß
das Sorptionsmittel so in den Apparat eingebunden ist, daß es zur Desorption an einen anderen Ort verbracht werden kann.

10. Sorptionsapparat nach einem der Ansprüche 6 bis 9, dadurch gekennzeichnet, daß
das Sorptionsmittel mit einer Wärmeabgabevorrichtung ausgerüstet ist, über welche während der Sorptionsphase Wärme abführbar ist.

11. Sorptionsapparat nach einem der Ansprüche 6 bis 10, dadurch gekennzeichnet, daß
das Sorptionsmittel Zeolith und das Arbeitsmittel Wasser enthält.

12. Sorptionsapparat nach einem der Ansprüche 6 bis 11, dadurch gekennzeichnet, daß
der Sorptionsapparat in mobilen Fahrzeugen zur Kühlung bzw. Erwärmung des Innenraums genutzt wird.

13. Sorptionsapparat nach einem der Ansprüche 6 bis 12, dadurch gekennzeichnet, daß
das Sorptionsmittel mit einer elektrischen Heizung versehen ist, die parrallel zur Ladezeit eines batteriebetriebenen Elektro-Fahrzeuges die Desorption des Sorptionsmittels erlaubt.

14. Sorptionsapparat nach einem der Ansprüche 6 bis 13, dadurch gekennzeichnet, daß
die Arbeitsmittelmenge größer ist als die vom Sorptionsmittel maximal sorbierbare Menge und diese zusätzliche, flüssige Arbeitsmittelmenge als Wärmereservoir genutzt wird.

15. Sorptionsapparat nach einem der Ansprüche 6 bis 14, dadurch gekennzeichnet, daß
noch nicht verdampftes, flüssiges Arbeitsmittel erstarrt und die Erstarrungswärme zur Verdampfung weiteren Arbeitsmittels dient.
